Europäisches Patentamt

European Patent Office

Office européen des brevets

(11) Veröffentlichungsnummer: **0 305 771 B1**

(12) **EUROPÄISCHE PATENTSCHRIFT**

(45) Veröffentlichungstag der Patentschrift: **22.07.92**

(51) Int. Cl.5: **H04B 7/185**

(21) Anmeldenummer: **88112866.4**

(22) Anmeldetag: **08.08.88**

(54) **Digitales Übertragungssystem mit vermittelndem Transmultiplexer.**

(30) Priorität: **04.09.87 DE 3729585**

(43) Veröffentlichungstag der Anmeldung:
**08.03.89 Patentblatt 89/10**

(45) Bekanntmachung des Hinweises auf die
Patenterteilung:
**22.07.92 Patentblatt 92/30**

(84) Benannte Vertragsstaaten:
**ES FR GB IT NL SE**

(56) Entgegenhaltungen:
**DE-A- 3 444 791
DE-A- 3 641 461
FR-A- 2 498 034
US-A- 4 381 562**

**IEEE INTERNATIONAL CONFERENCE ON
COMMUNICATIONS, Seattle, Washington,
7.-10. Juni 1987, Band 1, Seiten 244-248, IEEE,
New York, US; F. ANANASSO et al.:
"On-board technologies for user-oriented
SS-FDMA satellite systems"**

**PROCEEDINGS OF THE INTERNATIONAL
SYMPOSIUM ON CIRCUITS AND SYSTEMS,
Kyoto, 5.-7. Juni 1985, Band 2, Seiten
759-762, IEEE, New York, US; J. PANDEL et
al.: "A single path multiplier-free transmultiplexer scheme for an adder-based digital
signal processor"**

**SPACE COMMUNICATION AND BROADCA-
STING, Band 5, Nr. 2, Mai 1987, Seiten 71-78,
Elsevier Science Publishers B.V.
(North-Holland), NL; W. BERNER et al.: "A
baseband switch for future space applications"**

(73) Patentinhaber: **ANT Nachrichtentechnik GmbH
Gerberstrasse 33
W-7150 Backnang(DE)**

(72) Erfinder: **Göckler, Heinz, Dipl.-Ing.
Elbinger Strasse 52
W-7150 Backnang(DE)**

## Beschreibung

Die Erfindung betrifft ein digitales Übertragungssystem gemäß dem Oberbegriff des Patentanspruchs 1 bzw. 4.

Ein solches Übertragungssystem ist bekannt, beispielsweise durch die Aufsätze "On-Board Processing for Communication Satellite Systems: Technologies and Implementation" von Betaharon et al, 7th International Conference on Digital Satellite Communications, München, Germany, Mai 1986, S. 421 bis 426 und "Baseband Switches and Transmultiplexers for Use in an On-Board Processing Mobile/Business Satellite System" von Evans et al, 7th International Conference on Digital Satellite Communications, München, Germany, Mai 1986, S. 587 bis 592.

Das Einsatzgebiet eines solchen Übertragungssystems mit digitaler Frequenzmultiplex- bzw. Demultiplexbildung und digitaler Vermittlung ist vornehmlich in sogenannten intelligenten Satellitensystemen mit Vermittlung und Verkehrslenkung. Bei dieser künftigen Generation von Nachrichtensatelliten geht es darum, den gesamten über den Satelliten laufenden Nachrichtenverkehr, der von einer oder mehreren Bodenstationen kommen kann, möglichst flexibel, also weitgehend beliebig veränderbar, auf Richtantennen mit unterschiedlichen Ausleuchtzonen auf der Erde zu schalten. Die hauptsächlichste Anwendung liegt wohl im Satelliten-Mobilfunk, beispielsweise für Schiffe, Lastkraftwagen, Flugzeuge usw. Ein solcher mobiler Teilnehmer bewegt sich eine Zeitlang in der Keule der einen Antenne, später in dem Gebiet einer anderen Antenne; dann muß die Verbindung im Satelliten auf die andere Antenne geführt werden; in umgekehrter Richtung gilt dasselbe. Jedem mobilen Teilnehmer ist eine eigene individuelle Kanalfrequenz und eine schmale Bandbreite B (beispielsweise in der Größenordnung zwischen 8 und 20 KHz) zugeordnet, wobei der Verkehr vom mobilen Teilnehmer zum Satelliten bzw. umgekehrt über Frequenzmultiplexsignale abgewickelt wird. Um eine möglichst flexible Verkehrslenkung im Satelliten vornehmen zu können, sind die von einer Antenne des Satelliten empfangenen von dem mobilen Teilnehmer herrührenden Frequenzmultiplexsignale über einen Frequenzdemultiplexer zu führen, damit sie einzeln zur Verfügung gestellt und vermittelt werden können. Dann können die einzelnen Signale über eine Schaltmatrix auf die einzelnen Multiplexer geschaltet werden.

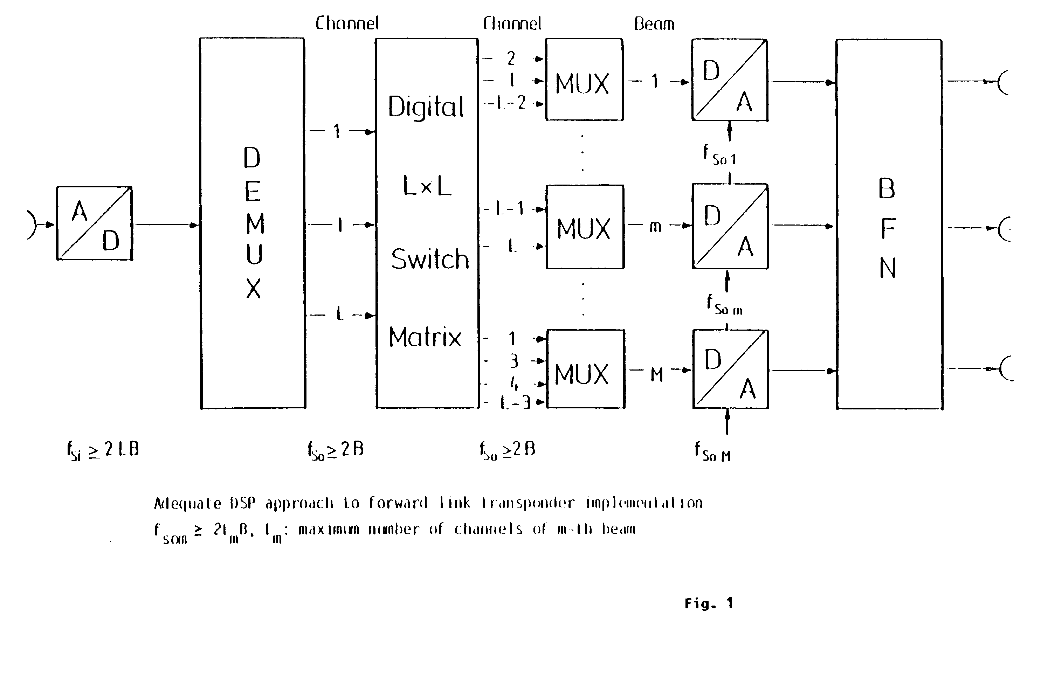

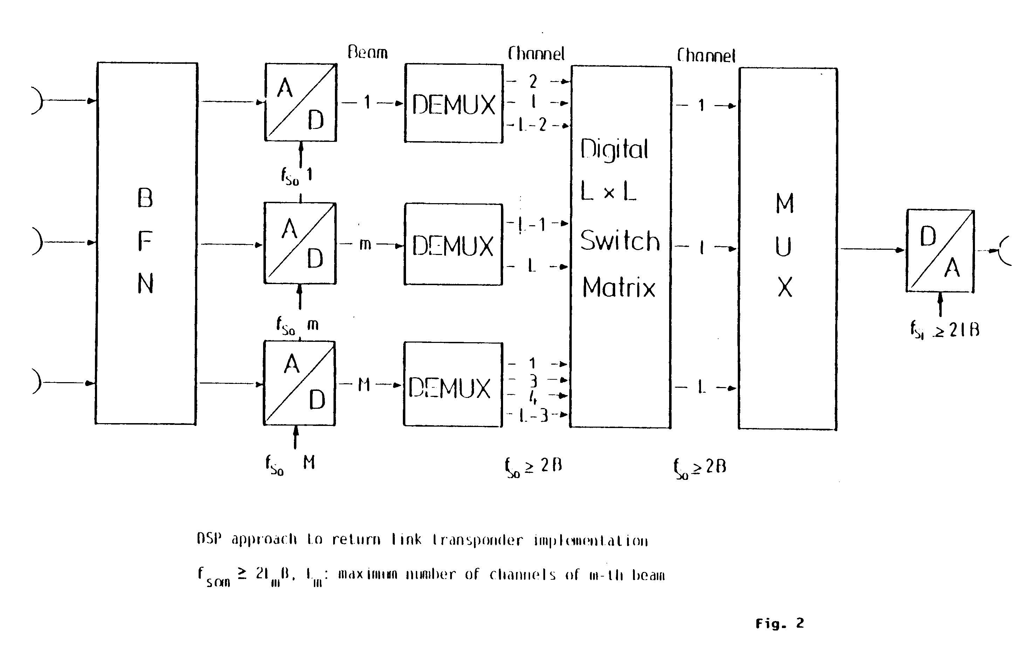

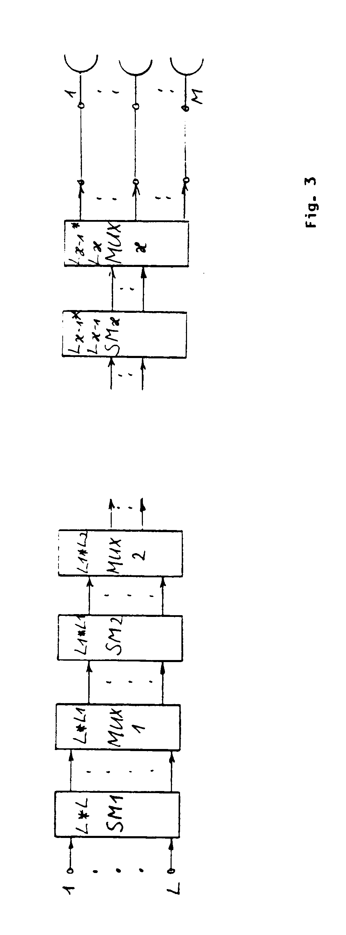

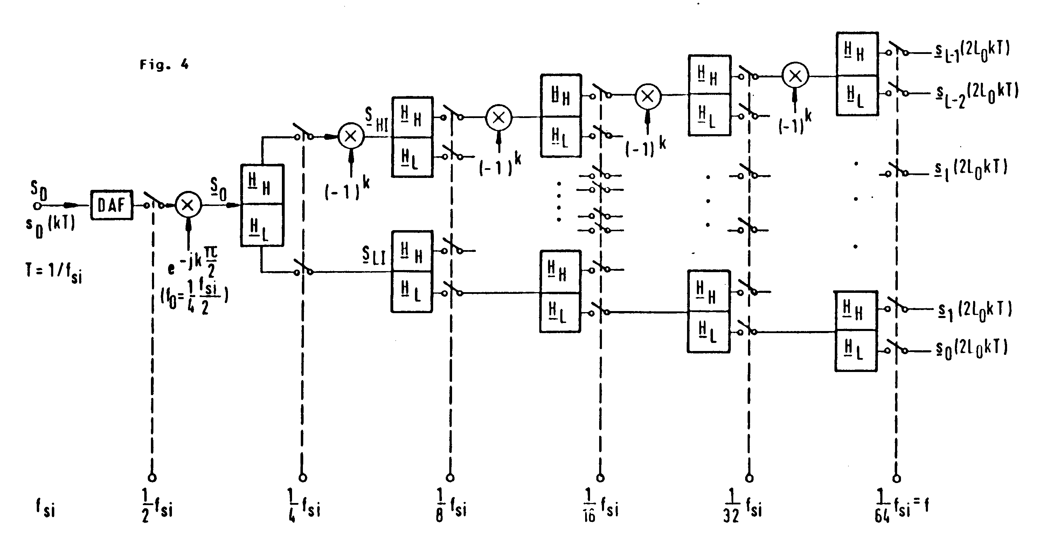

Den Stand der Technik stellen die Figuren 1 für die eine Übertragungsrichtung und die Figur 2 für die Rück-Übertragungsrichtung dar.

Nach Figur 1 wird das von der Bodenstation empfangene Frequenzmultiplexsignal analog/digital gewandelt, einem Demultiplexer DEMUX zugeführt, in dem die L in Frequenzmultiplex gebündelten Kanäle getrennt werden, diese so separierten L Kanäle über eine digitale Schaltmatrix L x L Switchmatrix vermittelt. Gruppen dieser L Kanäle werden anschließend mittels M Multiplexern gebündelt, deren Ausgangssignale nach Digital/Analog-Umwandlung und über ein Phasenansteuerungs-Netzwerk BFN, welches Richtung und Ausleuchtwinkel des Ausleuchtstrahls bestimmt, auf die Sendeantenne gegeben. Maximale Flexibilität dieser Vermittlung (Verkehrslenkung) wird dann erreicht, wenn alle M Multiplexer MUX für die M Antennenkeulen (Beams) sämtliche L Kanäle der Demultiplexer-Ausgangsseite DEMUX frequenzmultiplexen können. In diesem Fall kann bei entsprechender Auslegung der Schaltmatrix L x L Switchmatrix jede Keule entsprechend den Erfordernissen jede beliebige Anzahl von Kanälen, also zwischen 0 und L, übertragen. Zur Realisierung dieser maximal möglichen Flexibilität sind ein Demultiplexer für L Kanäle, eine aufwendige Zeit/Raum/zeit-Vielfach-Basisbandschalteinrichtung L x L Switchmatrix und M Multiplexer MUX für jeweils L Kanäle erforderlich. Von eingeschränkter Flexibilität spricht man, und dies ist bei der Mehrzahl der Systeme praktisch der Fall, wenn die M Multiplexer MUX nur jeweils L' < L Kanäle multiplexen können, wobei die Kanalzahlen für die einzelnen Multiplexer MUX unterschiedlich groß sein können. Die Figur 2 zeigt ein Übertragungssystem für die umgekehrte d.h. Gegenrichtung; die Funktionsweisen der einzelnen Blöcke erfolgt in entsprechender Weise in Gegenrichtung und bedürfen hier keiner weiteren Erläuterung.

Der vorliegenden Erfindung lag die Aufgabe zugrunde, den Aufwand und damit Volumen, Masse und Leistungsverbrauch für obiges Übertragungssystem bezüglich Basisbandschalteinrichtung und Frequenzmultiplexbildung zu vermindern, selbstverständlich unter Beibehaltung der vorgesehenen eingeplanten oder projektierten Flexibilität.

Die Lösung dieser Aufgabe erfolgt durch die kennzeichnenden Merkmale des Anspruches 1 bzw. des Anspruches 4.

Vorteil des erfindungsgemäßen Übertragungssystems ist der geringere Aufwand und damit kleinerer Leistungsverbrauch, kleinere Masse und kleineres Volumen. Damit verbunden sind weitere Vorteile: erhöhte Zuverlässigkeit bzw. reduzierte Redundanz, was im Hinblick auf Satellitenanwendungen vorrangige Ziele sind.

Die erfindungsgemäße Lösung beruht auf einer geeigneten Verzahnung bzw. Verschachtelung der Funktionen Schaltmatrix und Frequenzmultiplexbildung, was nachfolgend als verteilte bzw. hierarchische Verkehrslenkung und Multiplexbildung benannt wird.

Im Folgenden wird die Erfindung anhand der Figuren näher erläutert. Die Figur 3 zeigt die erfindungsgemäße Struktur der abwechslungsweisen Durchschaltung und Frequenzmultiplexbildung von Kanälen, wobei der Rahmen der in Figur 3 gezeigten Struktur genau die Funktionen der Blöcke Digital L x L Switchmatrix und die M Multiplexer MUX der Figur 1 umfaßt.

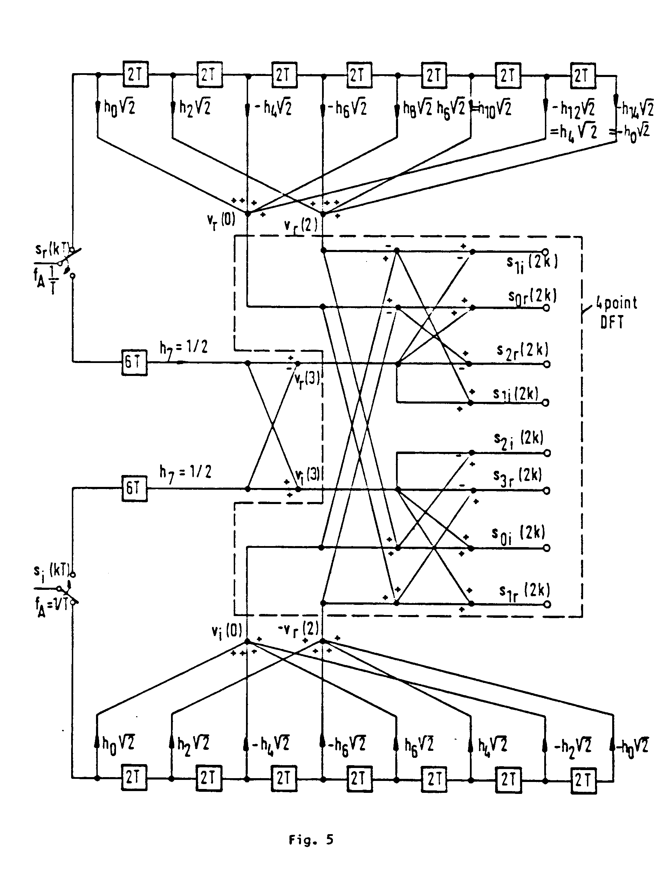

Die Figuren 4 und 5 entsprechen den Figuren 8 und 9 der deutschen Offenlegungsschrift DE-A-3 610 195 A1; sie geben eine optimale Ausgestaltung für die Multiplexerstruktur an.

In der Figur 3 ist erkennbar, daß abwechselnd vermittelt wird und zwar in den Schaltmatrizen SM und gemultiplext in den Teil-Frequenzmultiplexern MUX. Vorgesehen sind $\chi$-Stufen, die 1. Stufe mit der Schaltmatrix SM1 und dem daran angeschlossenen MUX1 bis zur Stufe $\chi$ mit $SM_X$ und $MUX_X$. Die 1. Schaltmatrix weist L = L0 Eingänge und L = L0-Ausgänge auf, Multiplexer MUX1 der 1. Stufe multiplext L = L0-Eingänge auf L1-Ausgänge, wobei L1 < L0. In den folgenden Stufen wird durch Multiplexbildung laufend die Zahl der Ausgänge der Multiplexer erniedrigt, und in der letzten Stufe stehen M Multiplexausgangssignale mit $L_X$ gemultiplexten Signalen für die M Strahlenkeulen zur Verfügung.

Bei Anwendung der digitalen Signalverarbeitung für die Schaltmatrix der einzelnen Stufen sind die Ein- und Ausgänge jeweils einem ganz bestimmten Zeitschlitz eines Datenbusses zugeordnet; die Funktion der Schaltmatrix besteht dann darin, die Zuordnung der $L_{x-1}$ Eingangs- zu den $L_{x-1}$ Ausgangszeitschlitzen in der x-ten Stufe für x = 0 bis x = $\chi$ entsprechend der gewünschten Verkehrslenkung vorzunehmen. Jeder Ausgangszeitschlitz der Schaltmatrix $SM_x$ ist fest einem Eingangskanal des nachfolgenden Teilfrequenzmultiplexers $MUX_x$ zugeordnet. Daher ist jede Schaltmatrix als Speicherschalter (Memory Switch), die im reinen Zeitvielfach arbeiten, realisierbar; als solche Schalter sind die Schaltmatrizen dann wesentlich aufwandsgünstiger als die geschlossen realisierte Schaltmatrix gemäß Figur 1 bzw. Figur 2, s. auch Kap. 3 des o.g. Aufsatzes "Baseband Switches ..." von Evans et al. Der Speicherschalter ist im Gegensatz zu der geschlossen realisierten Schaltmatrix gemäß Figur 1 bzw. 2 blockierfrei, was ein weiterer Vorteil der erfindungsgemäßen Lösung ist. Bei der erfindungsgemäßen Lösung werden allerdings etwa ld L bzw. ld L' (ld = logarithmus dualis, $\chi$ = ld daß bei der erfindungsgemäßen Lösung der Gesamtaufwand für die Verkehrslenkung nur unwesentlich geringer ist als der Aufwand gemäß Figur 1 bzw. Figur 2.

Der wesentliche erfindungsgemäße Aufwandsvorteil wird erzielt durch Einsparung von Multiplexeinheiten, nämlich einer Anzahl von einzelnen Multiplexern. Dies soll in der folgenden Beschreibung beleuchtet werden.

Wird Figur 1 betrachtet, so wird klar, daß den M Antennen jeweils verschiedene Nachrichtenströme zu liefern sind. Bei dem Extremfall, daß auf M-1 Antennen jeweils nur 1 Kanalsignal und auf eine Antenne die restlichen L-(M-1) bzw. L'-(M-1) verbleibenden Kanalsignale geführt werden sollen, muß sich die antenneneingangsseitige Gruppierung schon im Multiplexer MUX1 der 1. Stufe abzeichnen. Hier sind demnach 1/2 [L-(M-1)] nur mit einem Eingangssignal versorgt werden, erforderlich. Dabei bedeutet x Zahl zu x. Damit benötigt der 1. Multiplexer MUX1

$$L_1 = 1/2[L-(M-1)]$$

Einzelfrequzmultiplexer. Ein hierfür unmittelbar verwendbarer hierarchisch aufgebauter Multiplexer ist der Figur 4 als Gesamtstruktur und der Figur 5 als Einzelmultiplexer zu entnehmen; die detailliertere Beschreibung hierzu s. deutsche Patentanmeldung P 36 10 195, in der Anlage.

Allgemein gilt für die letzte Stufe $\chi$ unter der Voraussetzung L0 = L

$$L_\chi = \underbrace{\lceil 1/2 \lceil 1/2 \ldots \lceil 1/2 [L-(M-1)] \rceil \ldots \rceil}_{\chi\text{-mal}} + M-1.$$

Entsprechend des hierarchischen Aufbaus der Verkehrslenkung und der Frequenz-Teilmultiplexbildung erhöht sich in den einzelnen Multiplexerstufen die Abtastfrequenz jeweils um den Faktor 2; in entsprechender Weise wird die Abtastfrequenz der einzelnen Demultiplexerstufen in der Gegenrichtung um den Faktor 2 erniedrigt.

Anhand eines Beispieles wird im Folgenden der Aufwandsvorteil der erfindungsgemäßen Lösung gegenüber einer konzentrierten Lösung nachgewiesen. Mit M = 12 Strahlungkeulen sei der 1. Fall $L' = L = 2^8 = 256$ und in einem 2. Fall $L' = 2^6 = 64$.

3

EP 0 305 771 B1

Bei der Lösung gemäß dem Stande der Technik werden M = 12 komplette Frequenzmultiplexer für L' Kanäle benötigt. Mit einer stufenförmigen Struktur dieses konzentrierten Multiplexers sind dann ld L' Stufen erforderlich, wobei jede Stufe exakt dieselbe Rechenleistung C aufzuweisen hat, da von Stufe zu Stufe die Zahl der Einzelmultiplexer halbiert wird aber gleichzeitig die Abtastfrequenz verdoppelt wird. Setzt man die Rechenleistung (Aufwand) einer Stufe eines nach dem Stand der Technik konzentriert realisierten Multiplexers normiert mit 1 an, so gilt im Fall

a) ld L = 8 Stufen und eine Gesamtrechenleistung $C_K$ = M . ld L . 1 = 96 und im Fall

b) ld L' = 6 und eine Rechenleistung von $C_K$ = M . ld L' = 72.

Die entsprechenden Rechenleistungen $C_V$ einer verteilten Multiplexerstuktur nach der erfindungsgemäßen Lösung ergeben sich in Relation zum konzentrierten Multiplexer $C_K$ zu folgenden Werten:

Fall a)

$$C_V = L1/L/2 + L2/L/4 + L3/L/8 + ... L8/L/256 = 135/128 + 73/64 + 42/32 + 27/16 + 19/8 + 15/4 + 13/2 + 12/1 = 29,8125$$

oder im Vergleich zur Rechenleistung der konzentrierten Multiplexausführung

$$C_V/C_K = 29,8125/96 = 0,31$$

Fall b)

$$C_V = L1/L'/2 + L2/L'/4 + ... + L6/L'/64$$
$$= 134/32 + 73/16 + 42/8 + 27/4 + 19/2 + 15/1 = 45,25$$

oder im Vergleich zur konzentrierten Multiplexer-Ausführung

$$C_V/C_K = 45,25/96 = 0,628.$$

Die Figur 4 zeigt eine Baumstruktur-Realisierung eines stufenweise verteilten Demultiplexers aus lauter 1:2-Einzeldemultiplexern, welche jeweils unter Halbierung der Abtastrate das Eingangssignal in zwei Hälften zerlegen. Nicht eingezeichnet sind hier die Schaltmatrizen, welche jeweils zwischen den einzelnen Stufen einzuschleifen sind. Eine solche Baumstruktur ist vorteilhafterweise einzusetzen im Transponder gemäß Figur 2.

Für die Anordnung zur Übertragung in Rückrichtung gemäß Figur 1 eignet dieselbe Struktur nach Figur 4, wobei lediglich die Pfeilrichtung der Übertragungsrichtung umzudrehen wäre, so daß eine entsprechende baumstrukturierte verteilte Multiplexanordnung entsteht.

In Figur 5 ist eine besonders aufwandsgünstige Anordnung für einen Teildemultiplexer im Detail (Beschreibung hierzu s. Offenlegungsschrift DE-A-3 610 195 gezeichnet.

In vorteilhafter Weise lassen sich die Schaltmatrizen als Speicherschalter (Memory Switch) realisieren, solche Memory Switches sind beispielsweise beschrieben in dem Aufsatz "A Baseband Switch for Future Space Applications" von Berner und Grassmann in Space Communication and Broadcasting 5 (1987), S. 71 bis 78 und in den beiden Offenlegungsschriften DE-A-3 641 561 und DE-A-3 720 644.

**Patentansprüche**

1. Digitales Übertragungssystem, bei dem L Kanalsignale mittels einer digitalen Schaltmatrix vermittelt werden auf die Eingänge von Multiplexern, welche jeweils bis zu $L' \le L$ Kanalsignale im Frequenzmultiplex zusammenfassen und welche ihr Ausgangssignal auf eine von $M \le L$ Richtungen abgeben,

dadurch gekennzeichnet, daß die Multiplexer insgesamt durch eine Kaskade von mehreren in Stufen hintereinandergeschalteten Einzelmultiplexern (Multiplexerstufen MUX1 ... MUX$_\chi$) realisiert werden, daß vor den einzelnen Teilmultiplexerstufen (MUX1 ... MUX$_\chi$) jeweils eine Schaltmatrix (SM1 ... SM$_\chi$) vorgeschaltet ist, daß in der x-ten Stufe, für $1 \le x \le \chi$, die Schaltmatrix (SMx) $L_{x-1}$ Eingänge und $L_{x-1}$ Ausgänge aufweist,

daß die $L_{x-1}$ Ausgänge der Schaltmatrix mit den $L_{x-1}$ Eingängen der Multiplexer der nachgeschalteten Multiplexerstufe (MUX$_x$), welche $L_x$ Ausgänge aufweist, und die $L_{x-1}$ Eingänge der Schaltmatrix mit den $L_{x-1}$ Ausgängen der vorgeschalteten Multiplexerstufe (MUX$_{x-1}$) verbunden sind.

4

2. Digitales Übertragungssystem nach Anspruch 1,
dadurch gekennzeichnet, daß die Multiplexer insgesamt durch eine Baumstruktur von stufenweise sich verzweigend, hintereinander angeordneten 2:1-Teilmultiplexern realisiert sind, wobei beim Übergang von der einen zur nächsten Stufe jeweils die Abtastfrequenz verdoppelt wird.

3. Digitales Übertragungssystem nach Anspruch 2,
dadurch gekennzeichnet, daß die 2:1-Teilmultiplexer durch digitale Filterbänke realisiert sind.

4. Digitales Übertragungssystem zur Übertragung von L Kanalsignalen, bei dem M $\leq$ L Signale, die jeweils durch Frequenzmultiplexbildung von höchstens L' $\leq$ L Kanalsignalen gebildet sind, aus M Richtungen empfangen werden und mittels Demultiplexern (DEMUX) in die L Einzelsignale zerlegt werden, wobei diese L Einzelkanäle mittels einer Schaltmatrix vermittelt werden,
dadurch gekennzeichnet, daß die Demultiplexer insgesamt durch eine Kaskade von mehreren in Stufen hintereinandergeschalteten Einzeldemultiplexern realisiert werden,
daß den einzelnen Teildemultiplexerstufen jeweils eine Schaltmatrix nachgeschaltet ist,
daß in der x-ten Stufe für 1 $\leq$ x $\leq_X$ die Schaltmatrix (SM$_x$) L$_{x-1}$ Ausgänge und L$_{x-1}$ Eingänge aufweist,
daß die L$_{x-1}$ Eingänge der Schaltmatrix mit den L$_{x-1}$ Ausgängen des vorgeschalteten Teildemultiplexers, der L$_x$ Eingänge aufweist, und die L$_{x-1}$ Ausgänge der Schaltmatrix mit den L$_{x-1}$ Eingängen des nachgeschalteten Teildemultiplexers verbunden sind.

5. Digitales Übertragungssystem nach Anspruch 4,
dadurch gekennzeichnet, daß die Demultiplexer insgesamt durch eine Baumstruktur von stufenweise sich verzweigend, hintereinander angeordneten 1:2-Teildemultiplexern realisiert sind, wobei beim Übergang von der einen zur nächsten Stufe jeweils die Abtastfrequenz halbiert wird.

6. Digitales Übertragungssystem nach Anspruch 4 oder 5,
dadurch gekennzeichnet, daß die 1:2-Teildemultiplexer durch digitale Filterbänke realisiert sind.

7. Digitales Übertragungssystem nach einem der vorhergehenden Ansprüche,
dadurch gekennzeichnet, daß die Schaltmatrizen durch Basisbandschalter realisiert sind.

**Claims**

1. Digital transmission system, in which L channel signals are communicated by means of a digital switching matrix to the inputs of multiplexers which each combine up to L' $\leq$ L signal channels in frequency multiplex and which deliver their output signal in one of M $\leq$ L directions, characterised thereby, that the multiplexers are realised altogether by a cascade of several individual multiplexers connected one behind the other in stages (multiplexer stages MUX1 to MUX$_X$), that a respective switching matrix (SM1 to SM$_X$) is connected in front of each of the individual partial multiplexer stages (MUX1 to MUX$_X$), that the switching matrix (SMx) in the xth stage displays L$_{x-1}$ inputs and L$_{x-1}$ outputs for 1 $\leq$ x $\leq_X$ , that the L$_{x-1}$ outputs of the switching matrix are connected with the L$_{x-1}$ inputs of the multiplexers of the multiplexer stage (MUX$_x$), which is connected therebehind and which displays L$_x$ outputs, and the L$_{x-1}$ inputs of the switching matrix are connected with the L$_{x-1}$ outputs of the multiplexer stage (MUX$_{x-1}$) connected in front thereof.

2. Digital transmission system according to claim 1, characterised thereby, that the multiplexers are realised altogether by a tree structure of 2:1 partial multiplexers which are arranged one behind the other and branch off in stages, wherein the scanning frequency is doubled each time on the transition from the one stage to the next.

3. Digital transmission system according to claim 2, characterised thereby, that the 2:1 partial multiplexers are realised by digital filter banks.

4. Digital transmission system for the transmission of L signal channels, in which M $\leq$ L signals, which are formed respectively by frequency multiplex formation from at most L' $\leq$ L signal channels, are received from M directions and split up by means of demultiplexers (DEMUX) into the L individual signals, wherein these L individual channels are communicated by means of a switching matrix, characterised thereby, that the demultiplexers are realised altogether by a cascade of several individual demultiplexers connected one behind the other in stages, that a respective switching matrix is connected behind each of the partial demultiplexer stages, that the switching matrix (SMx) in the xth stage displays $L_{x-1}$ inputs and $L_{x-1}$ outputs for $1 \leq x \leq \chi$, that the $L_{x-1}$ inputs of the switching matrix are connected with the $L_{x-1}$ outputs of the partial demultiplexer which is connected in front thereof and displays $L_x$ inputs and that the $L_{x-1}$ outputs of the switching matrix are connected with the $L_{x-1}$ inputs of the partial demultiplexer connected therebehind.

5. Digital transmission system according to claim 4, characterised thereby, that the demultiplexers are realised altogether by a tree structure of 1:2 partial demultiplexers which are arranged one behind the other and branch off in stages, wherein the scanning frequency is halved each time on the transition from the one stage to the next.

6. Digital transmission system according to claim 4 or 5, characterised thereby, that the 1:2 partial demultiplexers are realised by digital filter banks.

7. Digital transmission system according to one of the preceding claims, characterised thereby, that the switching matrices are realised by base band switches.

**Revendications**

1. Système de transmission numérique, où L signaux de voie sont commutés à l'aide d'une matrice de commutation numérique sur les entrées de multiplexeurs qui réunissent à chaque fois jusqu'à L' < L signaux de voie par multiplexage en fréquence et qui fournissent leur signal de sortie dans l'une des M $\leq$ L directions, caractérisé en ce que les multiplexeurs sont réalisés globalement sous la forme d'une cascade de plusieurs multiplexeurs individuels montés successivement en étages (étages de multiplexage MUX1... MUX$_\chi$), en ce que chacun des étages de multiplexeurs individuels (MUX1... MUX$_\chi$) est précédé d'une matrice de commutation (SM1...SM$_\chi$), en ce que, à l'étage x, pour $1 \leq x \leq \chi$, la matrice de commutation (SMx) possède $L_{x-1}$ entrées et $L_{x-1}$ sorties, en ce que les $L_{x-1}$ sorties de la matrice de commutation sont reliées aux $L_{x-1}$ entrées du multiplexeur de l'étage de multiplexage aval (MUX$_x$), qui possède $L_x$ sorties et les $L_{x-1}$ entrées de la matrice de commutation sont reliées aux $L_{x-1}$ sorties de l'étage de multiplexage amont (MUX$_{x-1}$).

2. Système de transmission numérique selon la revendication 1, caractérisé en ce que les multiplexeurs sont réalisés sous la forme d'une arborescence de multiplexeurs individuels 2:1 successifs se ramifiant à chaque étage, la fréquence d'échantillonnage étant doublée entre les étages.

3. Système de transmission numérique selon la revendication 2, caractérisé en ce que les multiplexeurs individuels 2:1 sont réalisés par des bancs de filtres numériques.

4. Système de transmission numérique pour la transmission de L signaux de voie, où M $\leq$ L signaux, formés par multiplexage en fréquence d'un maximum de L' < L signaux de voie, sont reçus de M directions et sont décomposés par des démultiplexeurs (DEMUX) en L signaux individuels, ces L voies individuelles étant commutées par une matrice de commutation, caractérisé en ce que les démultiplexeurs sont réalisés globalement par une cascade de plusieurs démultiplexeurs individuels montés successivement en étages, en ce que les différents étages de démultiplexeurs individuels sont suivis d'une matrice de commutation, en ce que, à l'étage x, pour $1 \leq x \leq \chi$, la matrice de commutation (SM$_x$) possède $L_{x-1}$ sorties et $L_{x-1}$ entrées, en ce que les $L_{x-1}$ entrées de la matrice de commutation sont reliées aux $L_{x-1}$ sorties du démultiplexeur individuel amont, qui possède $L_x$ entrées, et les $L_{x-1}$ sorties de la matrice de commutation sont reliées aux $L_{x-1}$ entrées du démultiplexeur individuel aval.

5. Système de transmission numérique selon la revendication 4, caractérisé en ce les démultiplexeurs sont réalisés sous la forme d'une arborescence de démultiplexeurs individuels 1:2 successifs se ramifiant à chaque étage, la fréquence d'échantillonnage étant divisée par 2 entre les étages.

6. Système de transmission numérique selon la revendication 4 ou 5, caractérisé en ce que les démultiplexeurs individuels 1:2 sont réalisés par des bancs de filtres numériques.

7. Système de transmission numérique selon l'une des revendications précédentes, caractérisé en ce que les matrices de commutation sont réalisées sous la forme de commutateurs à bande de base.

Adequate DSP approach to forward link transponder implementation

$f_{Som} \geq 2l_m B$, $l_m$: maximum number of channels of m-th beam

**Fig. 1**

EP 0 305 771 B1

Beam    Channel    Channel

B F N

A/D    $f_{So}\ 1$ — 1 → DEMUX — 2 → / 1 → / L-2 →

A/D    $f_{So}\ m$ — m → DEMUX — L-1 → / L →

A/D    $f_{So}\ M$ — M → DEMUX — 1 → / 3 → / 4 → / L-3 →

Digital L × L Switch Matrix

— 1 →
— l →
— L →

M U X

D/A    $f_{Sl} \geq 2lB$

$f_{So} \geq 2B$    $f_{So} \geq 2B$

DSP approach to return link transponder implementation

$f_{Som} \geq 2l_m B$, $l_m$: maximum number of channels of m-th beam

Fig. 2

EP 0 305 771 B1

Fig. 3

Fig. 4

Fig. 5